# EUROPEAN PATENT SPECIFICATION

(11) **EP 3 108 312 B1**
(45) Date of publication and mention of the grant of the patent: **25.09.2019**
(21) Application number: 14708085.7
(22) Date of filing: 21.02.2014
(51) Int. Cl.: G05B 23/02, B64F 5/00

(54) **METHODS FOR DETERMINING PERFORMANCE OF AN AIR-CONDITIONING SYSTEM OF AN AIRCRAFT**
VERFAHREN ZUR BESTIMMUNG DER LEISTUNG EINER KLIMAANLAGE EINES FLUGZEUGS
PROCÉDÉS DE DÉTERMINATION DE LA PERFORMANCE D'UN SYSTÈME DE CONDITIONNEMENT D'AIR D'UN AÉRONEF

(43) Date of publication of application: 28.12.2016
(73) Proprietor: Taleris Global LLP, Cheltenham, Gloucestershire GL52 8SF (GB)
(72) Inventor: LARDER, Brian David, Eastleigh Hampshire SO53 4YG (GB); HORABIN, Robert William, Eastleigh Hampshire SO53 4YG (GB); CATT, Christopher Joseph, Eastleigh Hampshire SO53 4YG (GB); HOWARD, Julia Ann, Eastleigh Hampshire SO53 4YG (GB); HEATH, Daniel James, Eastleigh Hampshire SO53 4YG (GB); SMIT, Johan Arnold, Eastleigh Hampshire SO53 4YG (GB); BEAVEN, Frank, Eastleigh Hampshire SO53 4YG (GB); ROBBINS, Mark John, Eastleigh Hampshire SO53 4YG (GB)
(74) Representative: Openshaw & Co.
(86) International application number: PCT/GB2014/050507
(87) International publication number: WO 2015/124888

(56) References cited:
- WO-A1-2012/140247
- WO-A1-2012/163985
- US-A1- 2006 126 608
- US-A1- 2009 112 368
- US-A1- 2010 204 855
- US-A1- 2011 031 323
- US-A1- 2013 179 028
- US-B1- 6 216 066

## Description

### BACKGROUND OF THE INVENTION

Contemporary aircraft have air-conditioning systems that take hot air from the engines of the aircraft for use within the aircraft. Currently, airlines and maintenance personnel wait until a fault or problem occurs with the system and then attempt to identify the cause and fix it during either scheduled or, more likely, unscheduled maintenance.

US 2006/0126608 A1 relates to a method and apparatus for system monitoring and maintenance and describes examples relating to a vehicle's environmental control system.

WO2012/163985 discloses a method and device for condition monitoring of a component or system in an aircraft.

### BRIEF DESCRIPTION OF THE INVENTION

In one embodiment, an aspect of the invention relates to a method of determining an overall performance of an air-conditioning system of an aircraft where the air-conditioning system includes at least one air-conditioning pack, the method comprising: transmitting data from a sensor operably coupled to at least one air-conditioning pack, while the aircraft is in a stable on-ground condition; comparing the transmitted data to a predetermined threshold; determining, by a controller, an overall performance of the air-conditioning system based on the comparing; and providing an indication of the determined overall performance; wherein the transmitted data is flow data from two air-conditioning packs; and wherein the predetermined threshold is determined from transmitted data related to flow data from one of the two air-conditioning packs and the comparing determines an amount of divergence between the flow data from the two air-conditioning packs.

In a non-claimed embodiment, there is also provided a method of determining overall performance of an air-conditioning system of multiple aircrafts including transmitting, from an air-conditioning pack of an aircraft, data related to an outlet temperature of the air-conditioning pack, transmitting, from an air-conditioning pack of at least one other aircraft, data related to an outlet temperature of the air-conditioning pack of the at least one other aircraft, comparing the transmitted data related to the outlet temperatures, determining an overall performance of the air-conditioning systems of the aircrafts based on the comparing, and providing an indication of the determined overall performance of the air-conditioning systems of the aircrafts.

### BRIEF DESCRIPTION OF THE DRAWINGS

In the drawings:
Figure 1 is a perspective view of an aircraft and a ground system in which embodiments of the invention may be implemented;
Figure 2 is a schematic view of a portion of an exemplary air-conditioning system;
Figure 3 is a schematic view of a portion of an exemplary air-conditioning system; and
Figure 4 is a flowchart showing a method of determining an overall performance of an air-conditioning system according to an embodiment of the invention.
Figure 5 is a flowchart showing a method of determining overall performance of air-conditioning systems of multiple aircrafts according to another embodiment of the invention.

### DESCRIPTION OF EMBODIMENTS OF THE INVENTION

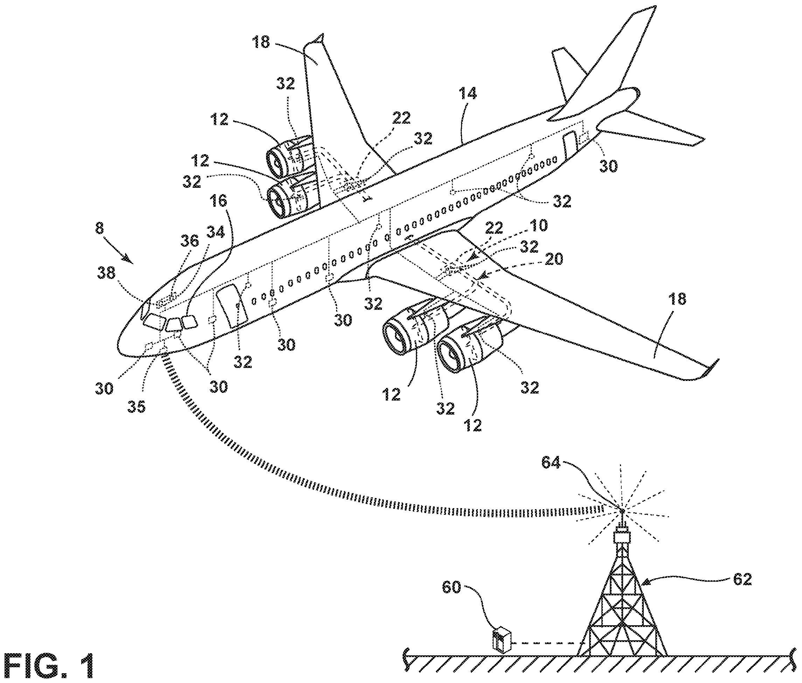

Figure 1 illustrates an aircraft 8 that may include an air-conditioning system 10, only a portion of which has been illustrated for clarity purposes, and may execute embodiments of the invention. As illustrated, the aircraft 8 may include multiple engines 12 coupled to a fuselage 14, a cockpit 16 positioned in the fuselage 14, and wing assemblies 18 extending outward from the fuselage 14. While a commercial aircraft has been illustrated, it is contemplated that embodiments of the invention may be used in any type of aircraft, for example, without limitation, fixed-wing, rotating-wing, rocket, personal aircraft, and military aircraft. Further, while two engines 12 have been illustrated on each wing assembly 18, it will be understood that any number of engines 12 including a single engine 12 may be included.

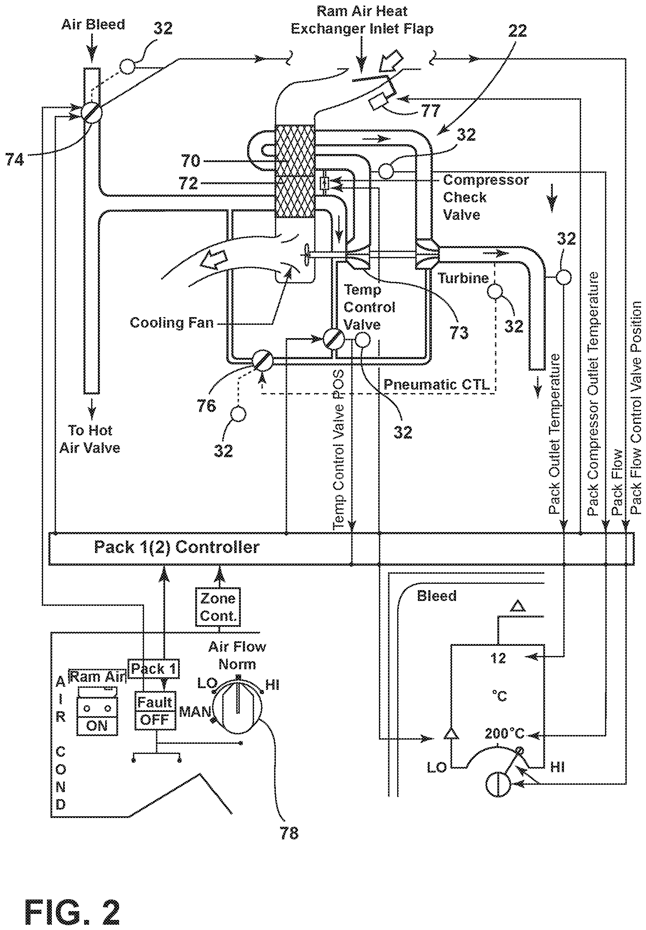

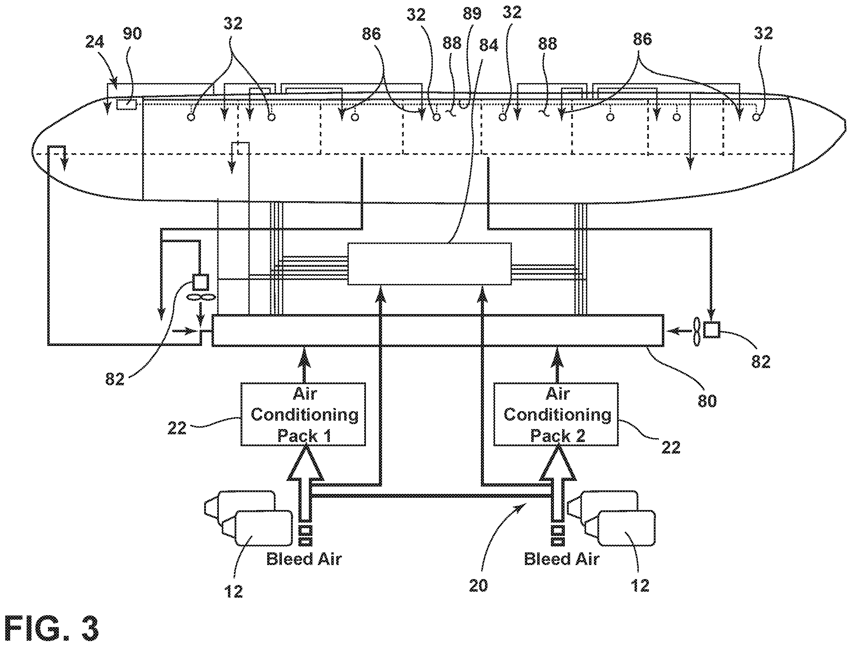

The air-conditioning system 10 may form a portion of the environmental control system of the aircraft 8 and may include a variety of subsystems. For example, among others, a bleed air system 20, one or more air conditioning packs 22, and an air distribution or cabin temperature control system 24 (Figure 3) may be included in the air-conditioning system 10. The bleed air system 20 may be connected to each of the engines 12 and air may be supplied to the air-conditioning system 10 by being bled from a compressor stage of each engine 12, upstream of the combustor. Various bleed ports may be connected to various portions of the engine 12 to provide highly compressed air to the bleed air system 20. The temperature and pressure of this bleed air varies widely depending upon which compressor stage and the RPM of the engine 12. The air conditioning packs 22 and cabin temperature control system 24 will be described in more detail with respect to Figures 2 and 3 below.

A plurality of additional aircraft systems 30 that enable proper operation of the aircraft 8 may also be included in the aircraft 8. A number of sensors 32 related to the air-conditioning system 10, its subsystems, and the additional aircraft systems 30 may also be included in the aircraft 8. It will be understood that any number of sensors may be included and that any suitable type of sensors may be included. The sensors 32 may transmit various output signals and information.

A controller 34 and a communication system having a wireless communication link 35 may also be included in the aircraft 8. The controller 34 may be operably coupled to the air-conditioning system 10, the plurality of aircraft systems 30, as well as the sensors 32. The controller 34 may also be connected with other controllers of the aircraft 8. The controller 34 may include memory 36, the memory 36 may include random access memory (RAM), read-only memory (ROM), flash memory, or one or more different types of portable electronic memory, such as discs, DVDs, CD-ROMs, etc., or any suitable combination of these types of memory. The controller 34 may include one or more processors 38, which may be running any suitable programs. The controller 34 may be a portion of an FMS or may be operably coupled to the FMS.

A computer searchable database of information may be stored in the memory 36 and accessible by the processor 38. The processor 38 may run a set of executable instructions to display the database or access the database. Alternatively, the controller 34 may be operably coupled to a database of information. For example, such a database may be stored on an alternative computer or controller. It will be understood that the database may be any suitable database, including a single database having multiple sets of data, multiple discrete databases linked together, or even a simple table of data. It is contemplated that the database may incorporate a number of databases or that the database may actually be a number of separate databases. The database may store data that may include historical air-conditioning system data for the aircraft 8 and related to a fleet of aircraft. The database may also include reference values including threshold values, historic values, or aggregated values and data related to determining such reference values.

Alternatively, it is contemplated that the database may be separate from the controller 34 but may be in communication with the controller 34 such that it may be accessed by the controller 34. For example, it is contemplated that the database may be contained on a portable memory device and in such a case, the aircraft 8 may include a port for receiving the portable memory device and such a port would be in electronic communication with controller 34 such that controller 34 may be able to read the contents of the portable memory device. It is also contemplated that the database may be updated through the wireless communication link 35 and that in this manner, real time information may be included in the database and may be accessed by the controller 34.

Further, it is contemplated that such a database may be located off the aircraft 8 at a location such as an airline operation center, flight operations department control, or another location. The controller 34 may be operably coupled to a wireless network over which the database information may be provided to the controller 34.

While a commercial aircraft has been illustrated, it is contemplated that portions of the embodiments of the invention may be implemented anywhere including in a computer or controller 60 at a ground system 62. Furthermore, the database(s) as described above may also be located in a destination server or a controller 60, which may be located at and include the designated ground system 62. Alternatively, the database may be located at an alternative ground location. The ground system 62 may communicate with other devices including the controller 34 and databases located remote from the controller 60 via a wireless communication link 64. The ground system 62 may be any type of communicating ground system 62 such as an airline control or flight operations department.

Figure 2 illustrates an exemplary schematic view of a cold air unit also known as an air conditioning pack 22 having a main heat exchanger 70, a primary heat exchanger 72, compressor 73, a flow control valve 74, a turbine 75, an anti-ice valve 76, a ram air actuator 77, and a controller 78, which may be located within the cockpit 16 of the aircraft 8 and may be operably coupled to the controller 34. Further, a number of sensors 32 have been illustrated as being included within the air conditioning pack 22. The sensors 32 may output a variety of data include data related to temperatures of the air-conditioning pack 22, pressures of the air-conditioning pack 22, or valve positions. For example, some of the sensors 32 may output various parameters including binary flags for indicating valve settings and/or positions including for example the state of the valve (e.g. fully open, open, in transition, close, fully closed).

It will be understood that any suitable components may be included in the air conditioning pack 22 such that it may act as a cooling device. The quantity of bleed air flowing to the air conditioning pack 22 is regulated by the flow control valve 74. The bleed air enters the primary heat exchanger 72 where it is cooled by either ram air, expansion, or a combination of both. The cold air then enters the compressor 73, where it is re-pressurized, which reheats the air. A pass through the main heat exchanger 70 cools the air while maintaining the high pressure. The air then passes through the turbine 75, which expands the air to further reduce heat.

Figure 3 illustrates an exemplary diagram of a cabin temperature control system 24 having a mixer unit 80, recirculation fans 82, a manifold 84, and nozzles 86 that distribute air into zones 88 of the aircraft 8, as well as a control mechanism 90. As illustrated, exhaust air from the air conditioning packs 22 may be mixed in a mixer unit 80 with filtered air from the recirculation fans 82 and fed into a manifold 84. Air from the manifold 84 may be directed to overhead distribution nozzles 86 in the various zones 88 of the aircraft 8. A control mechanism 90 may control the temperature in each zone 88 as well as a variety of other aspects of the cabin temperature control system 24. It will be understood that the control mechanism may be operably coupled to the controller 34. A number of sensors 32 may be included and may output signals related to various aspects of the cabin temperature control system 24 including temperatures within the zones 88, pressures within the cabin temperature control system 24, etc.

It will be understood that the aircraft 8 and the controller 60 merely represent two exemplary embodiments that may be configured to implement embodiments or portions of embodiments of the invention. During operation, either the aircraft 8 and/or the controller 60 may determine an overall health or performance of the air-conditioning system 10. By way of non-limiting example, one or more sensors 32 may transmit data relevant to various characteristics of the air-conditioning system 10. The controller 34 and/or the controller 60 may utilize inputs from the control mechanisms, sensors 32, aircraft systems 30, the database(s), and/or information from airline control or flight operations department to determine an overall performance of the air-conditioning system 10. Among other things, the controller 34 and/or the controller 60 may analyze the data over time to determine drifts, trends, steps, or spikes in the operation of the air-conditioning system 10. The controller 34 and/or the controller 60 may also analyze the sensor data and determine an overall performance of the air-conditioning system 10 based thereon. Once the overall performance of the air-conditioning system 10 has been determined, an indication may be provided on the aircraft 8 and/or at the ground system 62. It is contemplated that determining an overall performance of an air-conditioning system of one or more aircrafts may be done during flight, may be done post flight, or may be done after any number of flights. The wireless communication link 35 and the wireless communication link 64 may both be utilized to transmit data such that either the controller 34 and/or the controller 60 may determine an overall performance of an air-conditioning system of one or more aircrafts.

One of the controller 34 and the controller 60 may include all or a portion of a computer program having an executable instruction set for determining an overall performance of an air-conditioning system of one or more aircrafts. Regardless of whether the controller 34 and/or the controller 60 runs the program for determining an overall performance of an air-conditioning system of one or more aircrafts, the program may include a computer program product that may include machine-readable media for carrying or having machine-executable instructions or data structures stored thereon.

It will be understood that details of environments that may implement embodiments of the invention are set forth in order to provide a thorough understanding of the technology described herein. It will be evident to one skilled in the art, however, that the exemplary embodiments may be practiced without these specific details. The exemplary embodiments are described with reference to the drawings. These drawings illustrate certain details of specific embodiments that implement a module or method, or computer program product described herein. However, the drawings should not be construed as imposing any limitations that may be present in the drawings. The method and computer program product may be provided on any machine-readable media for accomplishing their operations. The embodiments may be implemented using an existing computer processor, or by a special purpose computer processor incorporated for this or another purpose, or by a hardwired system. Further, multiple computers or processors may be utilized including that the controller 34 and/or the controller 60 may be formed from multiple controllers. It will be understood that the controller determining an overall performance of an air-conditioning system of one or more aircrafts may be any suitable controller including that the controller may include multiple controllers that communicate with each other.

As noted above, embodiments described herein may include a computer program product comprising machine-readable media for carrying or having machine-executable instructions or data structures stored thereon. Such machine-readable media may be any available media, which may be accessed by a general purpose or special purpose computer or other machine with a processor. By way of example, such machine-readable media can comprise RAM, ROM, EPROM, EEPROM, CD-ROM or other optical disk storage, magnetic disk storage or other magnetic storage devices, or any other medium that can be used to carry or store desired program codes in the form of machine-executable instructions or data structures and that can be accessed by a general purpose or special purpose computer or other machine with a processor. When information is transferred or provided over a network or another communication connection (either hardwired, wireless, or a combination of hardwired or wireless) to a machine, the machine properly views the connection as a machine-readable medium. Thus, any such a connection is properly termed a machine-readable medium. Combinations of the above are also included within the scope of machine-readable media. Machine-executable instructions comprise, for example, instructions and data, which cause a general-purpose computer, special purpose computer, or special purpose processing machines to perform a certain function or group of functions.

Embodiments will be described in the general context of method steps that may be implemented in one embodiment by a program product including machine-executable instructions, such as program codes, for example, in the form of program modules executed by machines in networked environments. Generally, program modules include routines, programs, objects, components, data structures, etc. that have the technical effect of performing particular tasks or implement particular abstract data types. Machine-executable instructions, associated data structures, and program modules represent examples of program codes for executing steps of the method disclosed herein. The particular sequence of such executable instructions or associated data structures represent examples of corresponding acts for implementing the functions described in such steps.

Embodiments may be practiced in a networked environment using logical connections to one or more remote computers having processors. Logical connections may include a local area network (LAN) and a wide area network (WAN) that are presented here by way of example and not limitation. Such networking environments are commonplace in office-wide or enterprise-wide computer networks, intranets and the internet and may use a wide variety of different communication protocols. Those skilled in the art will appreciate that such network computing environments will typically encompass many types of computer system configurations, including personal computers, hand-held devices, multiprocessor systems, microprocessor-based or programmable consumer electronics, network PCs, minicomputers, mainframe computers, and the like.

Embodiments may also be practiced in distributed computing environments where tasks are performed by local and remote processing devices that are linked (either by hardwired links, wireless links, or by a combination of hardwired or wireless links) through a communication network. In a distributed computing environment, program modules may be located in both local and remote memory storage devices.

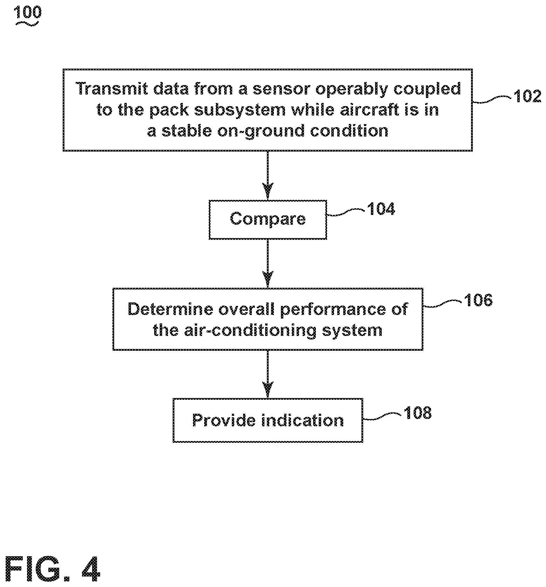

In accordance with an embodiment of the invention, Figure 4 illustrates a method 100, which may be used for determining an overall performance of the air-conditioning system 10 of an aircraft 8. The method 100 begins at 102 by transmitting from one or more sensors 32 data related to the air-conditioning pack 22. More specifically, data may be transmitted from one or more sensors 32 outputting data related to temperatures, pressures or flow rates, valve positions, actuator positions, etc. for components of the air conditioning pack 22. This may include sequentially and/or simultaneously transmitting data from one or more of the sensors 32. The transmitted data may be received by any suitable device including alone or in combination a database, the controller 34, and/or the controller 60.

The transmitted data may be related to a stable on-ground condition of the aircraft 8. More specifically, the transmitted data may be sensor output(s) when the aircraft 8 is in a stable on-ground condition. The term stable on-ground condition may include when the aircraft 8 is on the ground with its doors closed. This may include both pre-flight and post-flight, including taxi during both pre-flight and post-flight. It is contemplated that additional standard parameters, recorded by onboard systems, may be transmitted, such as position of the aircraft doors, altitude, and air or ground speed, such that the controller 34 and/or the controller 60 may determine when the aircraft 8 is in a stable on-ground condition. While the transmitted data may be related to when the aircraft 8 is in such a stable on-ground condition, it is contemplated that the data may be transmitted during any number of different phases of flight of the aircraft 8 or after the aircraft 8 has completed the flight. For example, sensor output may be transmitted once per flight, multiple times per flight, or after the flight.

The transmitting of data at 102 may define sensor output(s) relevant to one or more characteristics of the air-conditioning pack 22. It is contemplated that the senor output(s) may include raw data from which a variety of other information may be derived or otherwise extracted to define the sensor output. It will be understood that regardless of whether the sensor output is received directly or derived from received output, the output may still be considered sensor output. For example, the sensor output may be aggregated over time to define aggregated sensor data. Aggregating the transmitted sensor output over time may include aggregating the transmitted sensor output over multiple phases of flight and/or over multiple flights. Such aggregated sensor data may include a median value, a maximum value, a minimum value, etc. Such aggregated sensor data may be reset after a maintenance event.

At 104, the transmitted data or sensor output may be compared to a predetermined threshold for the transmitted data. The predetermined threshold may be any suitable predetermined threshold related to the transmitted data including that the predetermined threshold may be a temperature value including an outlet temperature of the air-conditioning pack 22, a pressure value, an acceptable valve or actuator position range, etc. The predetermined threshold for the transmitted data may also include a historical predetermined threshold for the sensor output including for example historical data related to the air-conditioning system of the aircraft or historical data for multiple other aircraft. Thus, the output signal may be compared to results obtained from previous flights for the same aircraft and against the whole fleet of aircraft. Furthermore, the predetermined threshold for the sensor output may include a value that has been determined during operation. Alternatively, the predetermined thresholds may be stored in one of the database(s) as described above. In this manner, the sensor output may be compared to a predetermined threshold for the sensor output. Any suitable comparison may be made. For example, the comparison may include determining a difference between the sensor output and the predetermined threshold or determining if the sensor output satisfies a predetermined threshold.

At 106, an overall performance of the air-conditioning system 10 may be determined based on the comparison at 104. For example, an overall performance may be determined when the comparison indicates that the transmitted data satisfies a predetermined threshold. The term "satisfies" the threshold is used herein to mean that the variation comparison satisfies the predetermined threshold, such as being equal to, less than, or greater than the threshold value. It will be understood that such a determination may easily be altered to be satisfied by a positive/negative comparison or a true/false comparison. For example, a less than threshold value can easily be satisfied by applying a greater than test when the data is numerically inverted.

It will be understood that the determined performance of the air-conditioning system 10 may be based on one comparison or multiple comparisons including that the transmitted data may be compared to multiple predetermined thresholds. One illustrative and non-limiting comparison is a multivariate analysis with multiple comparisons made across multiple sensor outputs, where the thresholds are not fixed, but are a function of all of the sensor values, which would be defined in the model. In implementation, the predetermined thresholds for the sensor output and comparisons may be converted to an algorithm to determined overall performance of the air-conditioning system 10. Such an algorithm may be converted to a computer program comprising a set of executable instructions, which may be executed by the controller 34 and/or the controller 60. Various other parameters recorded by onboard systems such as altitude, valve settings, etc. may also be utilized by such a computer program to determined overall performance of the air-conditioning system 10. Alternatively, the computer program may include a model, which may be used to determined overall performance of the air-conditioning system 10. The model may be implemented in software as an algorithm, such as one or more mathematical algorithms. A model may include the use of reasoning networks, flow charts, or decision trees. Diagnosis may be based upon understanding of the system and patterns in the data compared to previous determined overall performances. The model may ensure all information available is used and may discount false positives.

At 108, the controller 34 and/or the controller 60 may provide an indication of the determined overall performance of the air-conditioning system 10 diagnosed at 106. The indication may be provided in any suitable manner at any suitable location including in the cockpit 16 and at the ground system 62. For example, the indication may be provided on a primary flight display (PFD) in a cockpit 16 of the aircraft 8. If the controller 34 ran the program, then the indication may be provided on the aircraft 8 and/or may be uploaded to the ground system 62. Alternatively, if the controller 60 ran the program, then the indication may be uploaded or otherwise relayed to the aircraft 8. Alternatively, the indication may be relayed such that it may be provided at another location such as an airline control or flight operations department.

By way of non-limiting example, the data transmitted at 102 may include an outlet temperature of one of the air-conditioning packs 22. The comparison at 104 may determine whether the outlet temperature is above 10 °C. When the outlet temperature is above 10 °C, the overall performance of the air-conditioning system 10 may be considered poor and the indication at 108 may include an alert. Alternatively, the comparison at 104 may determine when the outlet temperature is between 0 °C and 10 °C. When the outlet temperature is between 0 °C and 10 °C, the overall performance of the air-conditioning system 10 may be considered below normal and the indication at 108 may indicate prioritized monitoring of the air-conditioning pack 22.

It will be understood that the method of determining overall performance of the air-conditioning system 10 is flexible and the method 100 illustrated is merely for illustrative purposes. For example, the sequence of steps depicted is for illustrative purposes only, and is not meant to limit the method 100 in any way, as it is understood that the steps may proceed in a different logical order or additional or intervening steps may be included without detracting from embodiments of the invention. For example, the data transmitted at 102 may be flow data from two air-conditioning packs 22 of the aircraft 8. Further, the predetermined threshold may be determined from transmitted data related to flow data from one of the two air-conditioning packs 22 and the comparison at 104 may determine an amount of divergence between the flow data from the two air-conditioning packs 22. Then the amount of divergence may be compared to an acceptable threshold. When the comparison indicates a divergence greater than the acceptable threshold an alert may be indicated. For example, where the comparison indicates a difference of more than 15% is observed, an alert may be indicated. Typically, the air-conditioning pack 22 with the lower flow is considered anomalous. Another illustrative and non-limiting example would be a ram air inlet flap position, which may be flagged on a median position during cruise, e.g. greater than 20 degrees, or divergence between left and right flap positions, e.g. absolute difference greater than 20 degrees, with the poorer performance being indicated by the greater median value.

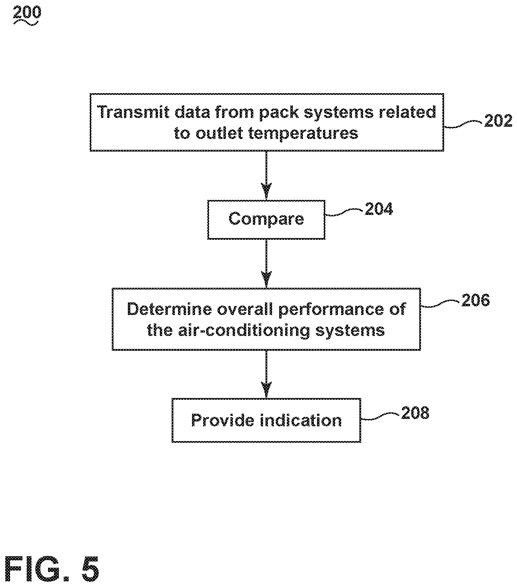

Figure 5 illustrates a method 200, which may be used for determining an overall performance of air-conditioning systems of multiple aircrafts according to another embodiment of the invention. The method 200 is similar to the method 100. Therefore, like parts will be identified with like numerals increased by 100, and it is understood that the description of like portions of the first method applies to the second method, unless otherwise noted. While only a single aircraft 8 has been illustrated, it will be understood that multiple aircrafts 8 having air-conditioning systems 10 including air-conditioning packs 22 may be provided.

The method 200 begins at 202 by transmitting data related to air-conditioning packs 22 of at least two aircraft 8. More specifically, this may include transmitting from an air-conditioning pack 22 of a first aircraft 8 data related to an outlet temperature of the air-conditioning pack 22 and transmitting, from an air-conditioning pack 22 of at least one other aircraft, data related to an outlet temperature of the air-conditioning pack 22 of the at least one other aircraft 8. This may include sequentially and/or simultaneously transmitting data related to an outlet temperature from sensors 32 of the two or more aircrafts 8. The transmitted data may be received by any suitable device including a database, a controller 34 of either aircraft 8, and/or the controller 60.

At 204, the transmitted data related to the outlet temperatures may be compared. Any suitable comparison may be utilized including, by way of non-limiting example, comparing the two outlet temperatures to determine which outlet temperature is lower. At 206, an overall performance of the air-conditioning systems of the aircrafts may be determined by a controller 34 of either aircraft 8 and/or the controller 60. Determining an overall performance of the air-conditioning systems 10 of the aircrafts 8 may help prioritize the application of preventative maintenance such as heat exchanger cleaning, etc. To determine the overall performance of the air-conditioning systems 10, the packs 22 may be ranked in descending pack outlet temperature. In this manner, the air-conditioning systems 10 with the lower outlet temperatures may be determined to have better overall performance. It is contemplated that the method 200 may be utilized to rank the individual packs across a fleet of aircraft. Since such determinations may be automatically performed on every flight without the need for manual data acquisitions, a larger number of data points may be acquired than what is currently possible. It is contemplated that such data points may be smoothed and/or trended over a window, allowing the progression of degradation to be trended whilst removing single point outliers that might be due to measurement error and/or ambient conditions rather than a true performance issues.

In implementation, the transmitted data, comparisons may be converted to an algorithm to determine overall performance of the air-conditioning systems 10. Such an algorithm may be converted to a computer program comprising a set of executable instructions, which may be executed by any of the controller(s) 34 and/or the controller 60. Alternatively, the computer program may include a model, which may be used to determined overall performance of the air-conditioning systems 10. A model may include the use of reasoning networks, flow charts, or decision trees. Diagnosis may be based upon understanding of the system and patterns in the data compared to previous determined overall performance.

At 208, one or more of the controllers 34 and/or the controller 60 may provide an indication of the determined overall performance of the air-conditioning systems 10 of the aircrafts 8 as determined at 206. The indication may be provided in any suitable manner at any suitable location including in one of the cockpits 16, at the ground system 62, or at another locations. For example, the indication may be provided on a primary flight display (PFD) in a cockpit 16 of the aircraft 8. If the controller 34 ran the program, then the suitable indication may be provided on the aircraft 8 and/or may be uploaded to the ground system 62. Alternatively, if the controller 60 ran the program, then the indication may be uploaded or otherwise relayed to one or more of the aircrafts 8. Alternatively, the indication may be relayed such that it may be provided at another location such as an airline control or flight operations department.

It will be understood that the method of determining an overall performance of an air-conditioning system of multiple aircrafts is flexible and the method 200 illustrated is merely for illustrative purposes. For example, the sequence of steps depicted is for illustrative purposes only, and is not meant to limit the method 200 in any way, as it is understood that the steps may proceed in a different logical order or additional or intervening steps may be included without detracting from embodiments of the invention. For example, the transmission of data from the multiple aircrafts may occur at different times. Further still, the transmitted data may be filtered such that only data obtained during similar operating conditions is compared. For example, it is contemplated that various other parameters recorded by onboard systems may be utilized such that the outlet temperature measurements may be filtered to those obtained during similar operating conditions. By way of non-limiting example, incruise measurements at a predetermined altitude range may be utilized to ensure that the aircrafts are operating under similar conditions. More specifically, the measurements may be limited to those taken during stable cruise at altitudes where outside conditions are generally more consistent. By way of further non-limiting example, on-ground measurements may be filtered to a particular airport location, ambient temperature, or humidity range to ensure that the aircrafts are operating under similar conditions. In this manner, it is contemplated that additional parameters may be required. Such additional parameters may include outside air temperature, dew point, humidity, etc. Although temperature is normally recorded by the aircraft systems, humidity may not be and this may necessitate the use of an external data source that may be queried for the time of the pack performance measurements at the location of acquisition. For example, this may come from third party weather databases, which typically make use of airport weather station data or from weather data in received ACARS messages.

Beneficial effects of the above-described embodiments include that data gathered by the aircraft may be utilized to determine an overall performance of an air-conditioning system of one or more aircrafts. In this manner, maintenance on such air-conditioning system(s) may be prioritized and scheduled. This allows for cost savings by reducing rescheduling costs and minimizing operational impacts including minimizing the time aircraft are grounded.

To the extent not already described, the different features and structures of the various embodiments may be used in combination with each other as desired. That one feature may not be illustrated in all of the embodiments is not meant to be construed that it may not be, but is done for brevity of description. Thus, the various features of the different embodiments may be mixed and matched as desired to form new embodiments, whether or not the new embodiments are expressly described. All combinations or permutations of features described herein are covered by this disclosure.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A method (100) of determining an overall performance of an air-conditioning system (10) of an aircraft (8) where the air-conditioning system includes at least one air-conditioning pack (22), the method comprising:
transmitting data (102) from a sensor (32) operably coupled to at least one air-conditioning pack, while the aircraft is in a stable on-ground condition;
comparing (104) the transmitted data to a predetermined threshold;
determining (106), by a controller (34), an overall performance of the air-conditioning system based on the comparing; and
providing (108) an indication of the determined overall performance;
wherein the transmitted data is flow data from two air-conditioning packs; and
wherein the predetermined threshold is determined from transmitted data related to flow data from one of the two air-conditioning packs and the comparing determines an amount of divergence between the flow data from the two air-conditioning packs.

2. The method (100) of claim 1, wherein the data is transmitted during taxi.

3. The method (100) of either of claim 1 or 2, wherein the transmitted data is an outlet temperature of the at least one air-conditioning pack (22).

4. The method (100) of claim 3, wherein the comparing determines when the outlet temperature is above 10 °C.

5. The method (100) of claim 4, wherein the indication is an alert when the outlet temperature is above 10 °C.

6. The method (100) of claim 3, wherein the comparing determines when the outlet temperature is between 0 °C and 10 °C.

7. The method (100) of claim 6, wherein the indication indicates prioritized monitoring.

8. The method (100) of any preceding claim, further comprising comparing the amount of divergence to an acceptable threshold.

9. The method (100) of claim 8, wherein when the comparing indicates a divergence greater than the acceptable threshold an alert is indicated.

## Patentansprüche

1. Verfahren (100) zum Ermitteln einer Gesamtleistung eines Klimatisierungssystems (10) eines Flugzeugs (8), wobei das Klimatisierungssystem zumindest ein Klimatisierungspaket (22) beinhaltet, das Verfahren umfassend:
Übertragen von Daten (102) von einem Sensor (32), der funktionsfähig mit zumindest einem Klimatisierungspaket verbunden ist, während sich das Flugzeug in einem stabilen Bodenzustand befindet;
Vergleichen (104) der übertragenen Daten mit einem vorbestimmten Schwellenwert;
Ermitteln (106) einer Gesamtleistung des Klimatisierungssystems durch eine Steuerung (34) basierend auf dem Vergleich; und
Bereitstellen (108) einer Angabe über die ermittelte Gesamtleistung;
wobei die übertragenen Daten Strömungsdaten von zwei Klimatisierungspaketen sind; und
wobei der vorbestimmte Schwellenwert aus übertragenen Daten in Bezug auf Strömungsdaten von einem der beiden Klimatisierungspakete ermittelt wird und der Vergleich das Maß der Divergenz zwischen den Strömungsdaten von den beiden Klimatisierungspaketen ermittelt.

2. Verfahren (100) nach Anspruch 1, wobei die Daten während des Rollens übertragen werden.

3. Verfahren (100) nach einem der Ansprüche 1 oder 2, wobei die übertragenen Daten eine Austrittstemperatur des zumindest einen Klimatisierungspakets (22) sind.

4. Verfahren (100) nach Anspruch 3, wobei durch den Vergleich ermittelt wird, wann die Austrittstemperatur über 10 °C liegt.

5. Verfahren (100) nach Anspruch 4, wobei die Angabe eine Warnung ist, wenn die Austrittstemperatur über 10 °C liegt.

6. Verfahren (100) nach Anspruch 3, wobei durch den Vergleich ermittelt wird, wann die Austrittstemperatur zwischen 0 °C und 10 °C liegt.

7. Verfahren (100) nach Anspruch 6, wobei die Angabe eine priorisierte Überwachung anzeigt.

8. Verfahren (100) nach einem der vorhergehenden Ansprüche, ferner umfassend das Vergleichen des Betrags der Abweichung mit einem akzeptablen Schwellenwert.

9. Verfahren (100) nach Anspruch 8, wobei, wenn der Vergleich eine Abweichung angibt, die größer als der zulässige Schwellenwert ist, eine Warnung ausgegeben wird.

## Revendications

1. Procédé (100) de détermination d'une performance globale d'un système de conditionnement d'air (10) d'un aéronef (8) où le système de conditionnement d'air comprend au moins un groupe de conditionnement d'air (22), le procédé comprenant :
la transmission de données (102) à partir d'un capteur (32) couplé de manière opérationnelle à au moins un groupe de conditionnement d'air, lorsque l'aéronef est dans un état stable au sol ;
la comparaison (104) des données transmises à un seuil prédéterminé ;
la détermination (106), par un contrôleur (34), d'une performance globale du système de conditionnement d'air basé sur la comparaison ; et
la fourniture (108) d'une indication de la performance globale déterminée ;
dans lequel les données transmises sont des données de débit provenant de deux groupe de conditionnement d'air ; et
dans lequel le seuil prédéterminé est déterminé à partir des données transmises liées aux données de débit provenant de l'un des deux groupes de conditionnement d'air et la comparaison détermine la quantité de divergence entre les données de débit des deux groupes de conditionnement d'air.

2. Procédé (100) selon la revendication 1, dans lequel les données sont transmises pendant le roulage.

3. Procédé (100) selon l'une quelconque des revendications 1 ou 2, dans lequel les données transmises sont une température de sortie de l'au moins un groupe de conditionnement d'air (22).

4. Procédé (100) selon la revendication 3, dans lequel la comparaison détermine le moment où la température de sortie est supérieure à 10 °C.

5. Procédé (100) selon la revendication 4, dans lequel l'indication est une alerte du moment où la température de sortie est supérieure à 10 °C.

6. Procédé (100) selon la revendication 3, dans lequel la comparaison détermine le moment où la température de sortie est comprise entre 0 °C et 10 °C.

7. Procédé (100) selon la revendication 6, dans lequel l'indication indique une surveillance prioritaire.

8. Procédé (100) selon l'une quelconque des revendications précédentes, comprenant en outre la comparaison de la quantité de divergence à un seuil acceptable.

9. Procédé (100) selon la revendication 8, dans lequel lorsque la comparaison indique une divergence supérieure au seuil acceptable, une alerte est indiquée.
